# EUROPEAN PATENT APPLICATION

(11) **EP 4 614 777 A1**
(43) Date of publication of application: **10.09.2025**
(21) Application number: 25160640.6
(22) Date of filing: 27.02.2025
(51) Int. Cl.: H02K 5/20, H02K 9/19

(54) **MOTOR CASE**

(30) Priority: 07.03.2024 JP 2024034565
(71) Applicant: Suzuki Motor Corporation, Shizuoka 432-8611 (JP)
(72) Inventor: YAMADA, Tomohiro, Hamamatsu-shi, Shizuoka, 432-8611 (JP); FUKUMA, Kazuki, Hamamatsu-shi, Shizuoka, 432-8611 (JP)
(74) Representative: Haseltine Lake Kempner LLP

(57) **Abstract**

A motor case (10) includes an inner case (21) in which a stator (32) of the motor (31) is shrink-fitted, and an outer case (11) in which the inner case is accommodated. A plurality of cooling ribs (22) are provided on an outer circumferential surface of the inner case. A cooling flow path (51) is formed between the inner case and the outer case. At an upstream portion and a downstream portion of the cooling flow path, a plurality of reinforcing ribs (26) with a height lower than a height of the cooling ribs are provided on the outer circumferential surface of the inner case instead of the plurality of cooling ribs.

## Description

### TECHNICAL FIELD

The present invention relates to a motor case.

### BACKGROUND ART

In the related art, a motor case formed of an outer case and an inner case is known (for example, see Patent Literature 1). The inner case is accommodated in the outer case, and a stator of a motor is fixed inside the inner case by shrink-fitting. A plurality of protrusions protrude from an outer circumferential surface of the inner case, and tips of the plurality of protrusions abut against an inner surface of the outer case. The plurality of protrusions are aligned in a motor axial direction, and each protrusion extends in a circumferential direction orthogonal to the motor axial direction. The outer case and the inner case are partitioned by the plurality of protrusions to form a cooling flow path through which cooling water flows.

### CITATION LIST

### PATENT LITERATURE

Patent Literature 1: JP2023-36351A

### SUMMARY OF INVENTION

### TECHNICAL PROBLEM

In the motor case described in Patent Literature 1, a strong shrink-fitting stress is generated in the inner case by shrink-fitting the stator to the inner case. Due to presence or absence of the protrusion of the inner case, a thickness difference occurs in the case, and the shrink-fitting stress to the inner case is not uniform. When the number of the protrusions is increased in order to improve the cooling performance, a stronger stress concentration portion occurs in the inner case. In particular, it is difficult to provide protrusions around an inlet and an outlet of the cooling water with respect to the motor case, and stress tends to concentrate.

The present invention has been made in view of such points, and an object thereof is to provide a motor case capable of increasing rigidity while improving cooling performance of a motor.

### SOLUTION TO PROBLEM

A motor case according to an aspect of the present invention includes an inner case in which a stator of a motor is shrink-fitted, and an outer case in which the inner case is accommodated, in which a plurality of cooling ribs is provided on an outer circumferential surface of the inner case, a cooling flow path is formed between the inner case and the outer case, and at an upstream portion and a downstream portion of the cooling flow path, a plurality of reinforcing ribs with a height lower than a height of the cooling ribs are provided on the outer circumferential surface of the inner case instead of the plurality of cooling ribs.

### ADVANTAGEOUS EFFECTS OF INVENTION

With the motor case according to an aspect of the present invention, the plurality of reinforcing ribs with a height lower than a height of the plurality of cooling ribs are provided at the upstream portion and the downstream portion of the cooling flow path, so that inflow and outflow of cooling water is hardly inhibited. In addition, the ribs are provided not only in a region excluding the upstream portion and the downstream portion of the cooling flow path, but also at the upstream portion and the downstream portion of the cooling flow path, and therefore, a thickness difference of the inner case becomes small, and stress concentration generated in the inner case can be alleviated. In addition, a surface area of the inner case in contact with the cooling water is increased by the plurality of cooling ribs and the plurality of reinforcing ribs to improve the cooling performance of the motor. Even when the density of the cooling ribs is increased, the thickness difference of the inner case does not become extremely large.

### BRIEF DESCRIPTION OF DRAWINGS

FIG. 1 is a side view of an inverter-integrated motor according to the present embodiment.
FIG. 2 is a front view of the inverter-integrated motor according to the present embodiment.
FIG. 3 is a cross-sectional view of the inverter-integrated motor in FIG. 1 taken along a line A-A.
FIG. 4 is a cross-sectional view of the inverter-integrated motor in FIG. 2 taken along a line B-B.
FIG. 5A is a side view of an inner case according to the present embodiment, and FIG. 5B is a top view of the inner case according to the present embodiment.
FIG. 6 is a perspective view of a heat sink according to the present embodiment.
FIGS. 7A and 7B are diagrams illustrating a stress distribution of the inner case.

### DESCRIPTION OF EMBODIMENTS

In a motor case according to an aspect of the present invention, an inner case is accommodated in an outer case, and a stator of a motor is shrink-fitted to the inner case. A plurality of cooling ribs are provided on an outer circumferential surface of the inner case, and a cooling flow path is formed between the inner case and the outer case. At an upstream portion and a downstream portion of the cooling flow path, a plurality of reinforcing ribs with a height lower than a height of the cooling ribs are provided on the outer circumferential surface of the inner case instead of the plurality of cooling ribs, so that inflow and outflow of the cooling water is hardly inhibited. In addition, the ribs are provided not only in a region excluding the upstream portion and the downstream portion of the cooling flow path, but also at the upstream portion and the downstream portion of the cooling flow path, and therefore, a thickness difference of the inner case becomes small, and stress concentration generated in the inner case can be alleviated. In addition, a surface area of the inner case in contact with the cooling water is increased by the plurality of cooling ribs and the plurality of reinforcing ribs to improve the cooling performance of the motor. Even when the density of the cooling ribs is increased, the thickness difference of the inner case does not become extremely large.

### Embodiment

In a motor case of a general vehicle motor, an inner case is accommodated inside an outer case, and a cooling flow path is formed by a plurality of cooling ribs protruding from an outer circumferential surface of the inner case. A stator is shrink-fitted inside the inner case, and shrink-fitting stress is generated in the inner case. Normally, ribs are not provided at an upstream portion and a downstream portion of the cooling flow path, and therefore, stress concentration occurs due to a thickness difference of the inner case. In particular, in a case where the density of the cooling ribs is increased in order to improve the cooling performance, the stress concentration becomes strong. Therefore, in the present embodiment, the density of the cooling ribs is increased, and the ribs are also provided at the upstream portion and the downstream portion of the cooling flow path to alleviate the stress concentration.

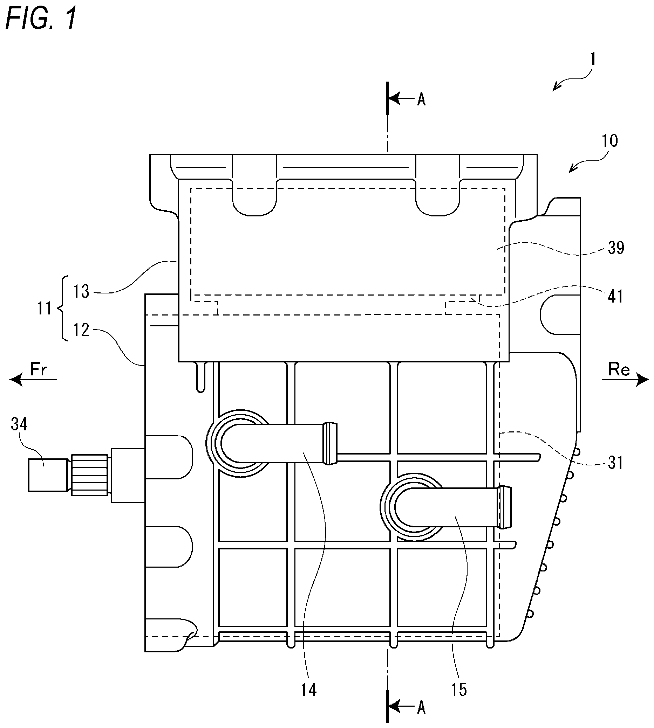

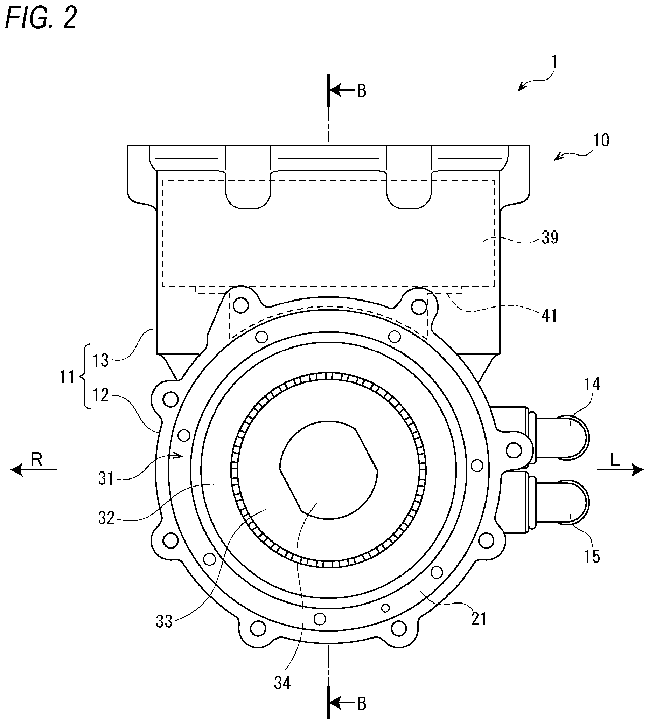

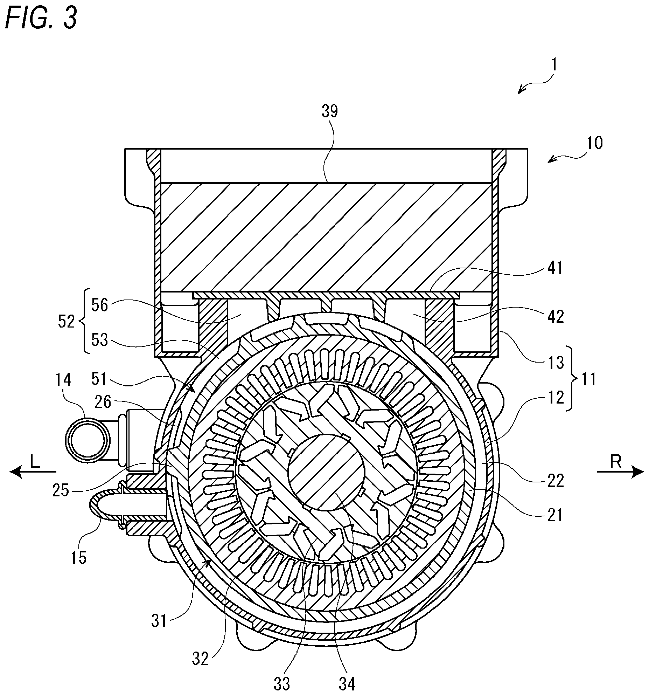

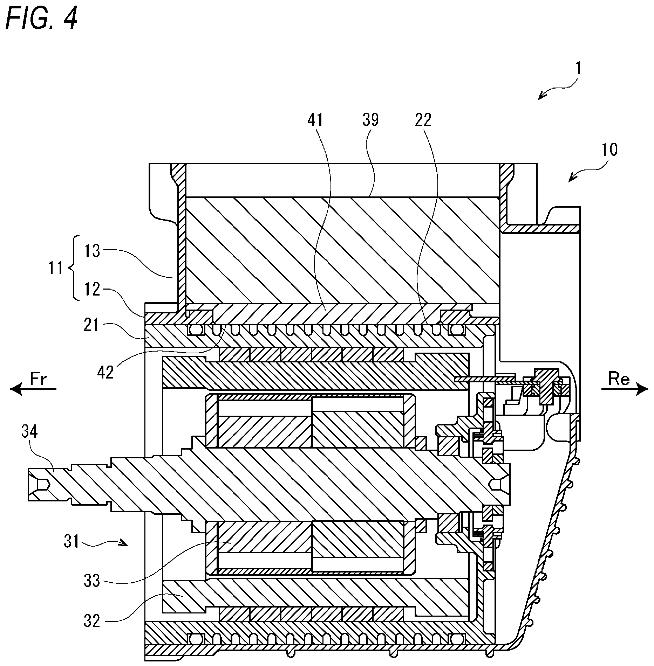

An inverter-integrated motor according to the present embodiment will be described below with reference to the accompanying drawings. FIG. 1 is a side view of the inverter-integrated motor according to the present embodiment. FIG. 2 is a front view of the inverter-integrated motor according to the present embodiment. FIG. 3 is a cross-sectional view of the inverter-integrated motor in FIG. 1 taken along a line A-A. FIG. 4 is a cross-sectional view of the inverter-integrated motor in FIG. 2 taken along a line B-B. In the following drawings, an arrow Fr indicates a front side, an arrow Re indicates a rear side, an arrow L indicates a left side, and an arrow R indicates a right side.

As illustrated in FIGS. 1 and 2, in an inverter-integrated motor 1, a motor 31 and an inverter 39 are installed inside a single motor case 10. In the motor case 10, an inner case 21 is accommodated inside an outer case 11. A lower side of the outer case 11 is a tubular portion 12 whose front surface is opened, and an upper side of the outer case 11 is a box-shaped portion 13 whose upper surface is opened. A bottom surface of the box-shaped portion 13 is largely opened, and a heat sink 41 is installed in the opening of the box-shaped portion 13. The opening of the box-shaped portion 13 is closed by the heat sink 41, so that the inside of the box-shaped portion 13 and the inside of the tubular portion 12 are partitioned by the heat sink 41.

The inner case 21 which is tubular is installed inside the tubular portion 12, and the motor 31 is installed inside the inner case 21. A stator 32 of the motor 31 is shrink-fitted inside the inner case 21, and a rotor 33 is rotatably installed inside the stator 32. A motor shaft 34 is fixed to a center of the rotor 33, and the motor shaft 34 protrudes forward from the inner case 21 (motor case 10). An inverter 39 is installed inside the box-shaped portion 13, and rotation of the motor 31 is controlled by the inverter 39. The inverter 39 is supported on an upper surface of the heat sink 41, and the inverter 39 is cooled by the heat sink 41.

A cooling flow path 51 (see FIGS. 3 and 4) is formed between the inner case 21 and the outer case 11 so as to surround the motor 31. An inlet pipe 14 and an outlet pipe 15 are attached to one side surface of the tubular portion 12 of the outer case 11. Cooling water is supplied from the inlet pipe 14 to an inlet of the cooling flow path 51, and the cooling water is discharged from an outlet of the cooling flow path 51 to the outlet pipe 15. The cooling flow path 51 is formed around the inner case 21 and at a lower side of the heat sink 41, and the motor 31 and the inverter 39 are effectively cooled while the cooling water passes around the inner case 21 and the lower surface of the heat sink 41.

As illustrated in FIGS. 3 and 4, a plurality of cooling ribs 22 are provided on an outer circumferential surface of the inner case 21, and top surfaces of the plurality of cooling ribs 22 are in contact with an inner circumferential surface of the tubular portion 12 of the outer case 11. The heat sink 41 is installed in the opening in the upper portion of the tubular portion 12, and the lower surface of the heat sink 41 faces the outer circumferential surface of the inner case 21. A plurality of cooling fins 42 are provided on the lower surface of the heat sink 41, and top surfaces of the plurality of cooling fins 42 protrude towards the inner case 21. The cooling flow path 51 is formed around the inner case 21 by the plurality of cooling ribs 22, and a common flow path 52 is formed in a part of the cooling flow path 51 by the plurality of cooling ribs 22 and the plurality of cooling fins 42.

Most of the cooling ribs 22 extend along the circumferential direction of the inner case 21, but a part of the cooling ribs 22 facing the heat sink 41 extends along an axial direction of the inner case 21. In addition, most of the cooling fins 42 extend along the circumferential direction of the inner case 21, but a part of the cooling fins 42 extend along the axial direction of the inner case 21. This part of the cooling ribs 22 and this part of the cooling fins 42 are arranged to be displaced in the circumferential direction. Therefore, in the common flow path 52 between the inverter 39 and the motor 31, the cooling water flows between the inner case 21 and the heat sink 41.

In this manner, the common flow path 52 that simultaneously cools the motor 31 and the inverter 39 is formed between the inner case 21 and the heat sink 41. Separate flow paths for the inner case 21 and the heat sink 41 become unnecessary, so that the motor 31 and the inverter 39 are brought close to each other to reduce the size of the motor case 10. The common flow path 52 is divided into inter-rib flow paths 53 on an inner case 21 side and inter-fin flow paths 56 on a heat sink 41 side. In the common flow path 52, the cooling performance of the motor 31 and the inverter 39 is adjusted by heights of the plurality of cooling ribs 22 and the plurality of cooling fins 42, a height dimension of the flow path does not become larger than necessary, and the size of the motor case 10 is reduced.

A partition wall 25 that separates the cooling flow path 51 into upper and lower portions is provided on one side portion of the outer circumferential surface of the inner case 21. The partition wall 25 extends along the axial direction of the inner case 21, and a top surface of the partition wall 25 is in contact with the inner circumferential surface of the tubular portion 12. The inlet pipe 14 is located above the partition wall 25, and a portion above the partition wall 25 is an upstream portion of the cooling flow path 51. The outlet pipe 15 is located below the partition wall 25, and a portion below the partition wall 25 is a downstream portion of the cooling flow path 51. In this manner, the cooling flow path 51 through which the cooling water flows clockwise in a cross-sectional view (rear view) is formed.

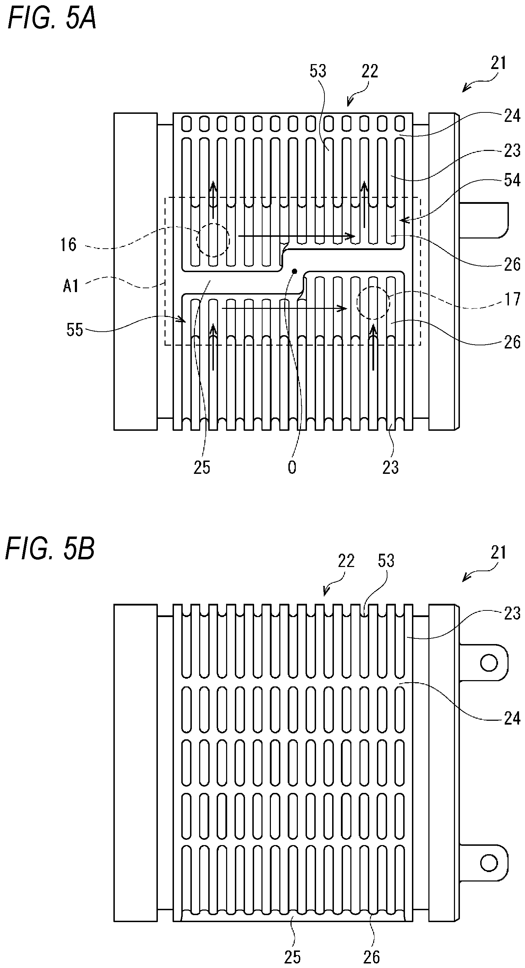

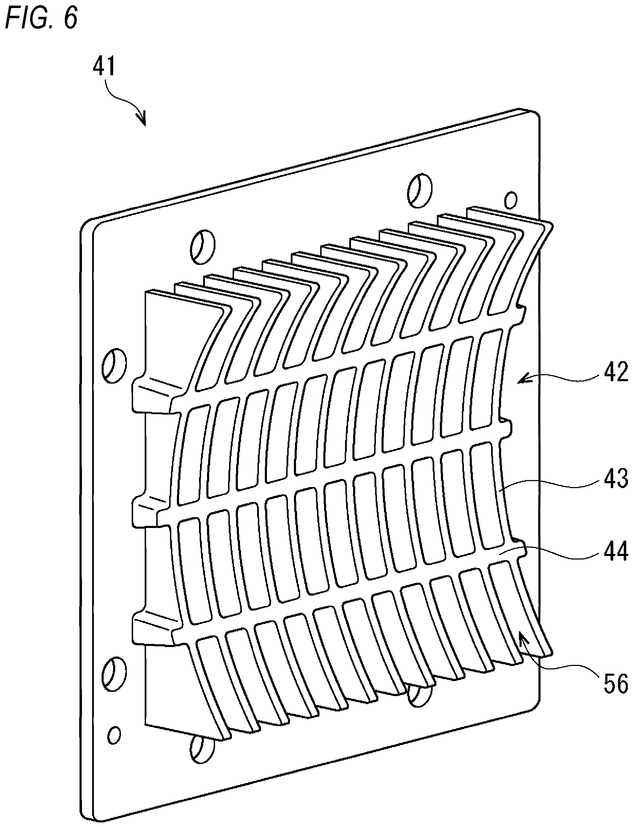

The inner case and the heat sink will be described with reference to FIGS. 5A to 6. FIG. 5A is a side view and FIG. 5B is a top view of the inner case according to the present embodiment. FIG. 6 is a perspective view of the heat sink according to the present embodiment.

As illustrated in FIG. 5A and FIG. 5B, the plurality of cooling ribs 22 are provided on the outer circumferential surface of the inner case 21. The plurality of cooling ribs 22 include a plurality of vertical ribs 23 aligned in a motor axial direction and a plurality of transverse ribs 24 aligned in the circumferential direction perpendicular to the motor axial direction. The plurality of vertical ribs 23 extend in the circumferential direction, and the plurality of transverse ribs 24 are orthogonal to the plurality of vertical ribs 23. The plurality of vertical ribs 23 are formed over substantially the entire circumference of the inner case 21 except for vicinity of an inlet 16 and vicinity of an outlet 17 of the inner case 21, and the plurality of transverse ribs 24 are formed only on an upper portion of the inner case 21 facing the heat sink 41 (see FIG. 6).

In the inner case 21, the plurality of inter-rib flow paths 53, a branching flow path 54, and a merging flow path 55 are formed as the cooling flow path 51. The cooling water flows along the vertical ribs 23 by the plurality of inter-rib flow paths 53, and the motor 31 (see FIG. 2) is cooled over the entire circumference via the inner case 21. At the upstream portion of the cooling flow path 51, the branching flow path 54 extends in the motor axial direction, and the cooling water entering from the inlet 16 is branched into the plurality of inter-rib flow paths 53 by the branching flow path 54. At the downstream portion of the cooling flow path 51, the merging flow path 55 extends in the motor axial direction, and the cooling water in the plurality of inter-rib flow paths 53 is merged by the merging flow path 55 and discharged from the outlet 17.

The vertical ribs 23 and the transverse ribs 24 are formed at the same height as the outermost diameter of the inner case 21. The height of the vertical ribs 23 and the transverse ribs 24 is constant, so that a flow path cross-sectional area around the motor is constant, and cooling of the motor 31 having a large amount of heat is stabilized. At the upper portion of the inner case 21, the vertical ribs 23 and the transverse ribs 24 are arranged in a lattice shape, and the plurality of inter-rib flow paths 53 are partially blocked by the plurality of transverse ribs 24. The upper portion of the inner case 21 faces the heat sink 41, and an intermittent portion of the plurality of inter-rib flow paths 53 communicates with the plurality of inter-fin flow paths 56 (see FIG. 6) on the heat sink 41 side.

In the branching flow path 54 and the merging flow path 55, a plurality of reinforcing ribs 26 with a height lower than a height of the vertical ribs 23 are provided on the outer circumferential surface of the inner case 21 instead of the vertical ribs 23. The plurality of reinforcing ribs 26 are connected to the vertical ribs 23 and extend in the circumferential direction. The plurality of reinforcing ribs 26 are formed to have the same width as the vertical ribs 23. Since the inner case 21 is provided with ribs over the entire circumference, a thickness difference due to presence or absence of the ribs of the inner case 21 is small, and stress concentration due to shrink-fitting of the stator 32 is alleviated. In addition, a surface area of the inner case 21 is increased by the plurality of reinforcing ribs 26 to, improve the cooling performance of the motor 31.

By forming the plurality of reinforcing ribs 26 to be low, a sufficient gap is ensured between the plurality of reinforcing ribs 26 and the tubular portion 12 of the outer case 11, and the flow of the cooling water in the branching flow path 54 and the merging flow path 55 is less likely to be inhibited by the reinforcing ribs 26. Top surfaces of the plurality of vertical ribs 23 and the plurality of transverse ribs 24 are formed in a planar shape in the side view so as to be in contact with an inner circumferential surface of the outer case 11, and top surfaces of the plurality of reinforcing ribs 26 are formed in a rounded round shape in the cross-sectional view so as not to disturb the flow of the cooling water. A flow path width of the plurality of inter-rib flow paths 53 is equal to or less than a width of the vertical ribs 23. The number of flow paths of the inter-rib flow paths 53 is increased to improve the cooling performance, and the rigidity of the inner case 21 is easily maintained even when the number of flow paths is increased.

The partition wall 25 extending in the motor axial direction is provided on the outer circumferential surface of the inner case 21, and the branching flow path 54 and the merging flow path 55 are adjacent to each other in the circumferential direction with the partition wall 25 interposed therebetween. The cooling water flows from the branching flow path 54 above the partition wall 25 to the merging flow path 55 below the partition wall 25 via the plurality of inter-rib flow paths 53, so that the motor 31 is cooled over the entire circumference. In the tubular portion 12 of the outer case 11 (see FIG. 1), the inlet 16 is formed on one end side in the motor axial direction, and the outlet 17 is formed on the other end side in the motor axial direction. The inlet 16 is connected to one end side of the branching flow path 54 in the motor axial direction, and the outlet 17 is connected to the other end side of the merging flow path 55 in the motor axial direction.

The partition wall 25 is formed in a crank shape so that a flow path width of the branching flow path 54 increases at a portion corresponding to the inlet 16 and a flow path width of the merging flow path 55 increases at a portion corresponding to the outlet 17. More specifically, a wide portion of the branching flow path 54 is adjacent to a narrow portion of the merging flow path 55 in the circumferential direction with the partition wall 25 interposed therebetween, and a narrow portion of the branching flow path 54 is adjacent to a wide portion of the merging flow path 55 in the circumferential direction with the partition wall 25 interposed therebetween. The flow path widths of the branching flow path 54 and the merging flow path 55 are widened in the vicinity of the inlet 16 and in the vicinity of the outlet 17, so that inflow and outflow of the cooling water are less likely to be inhibited even when the plurality of reinforcing ribs 26 are provided in the branching flow path 54 and the merging flow path 55.

The wide portion of the branching flow path 54 is adjacent to the narrow portion of the merging flow path 55 and the narrow portion of the branching flow path 54 is adjacent to the wide portion of the merging flow path 55, so that a total region of the branching flow path 54 and the merging flow path 55, that is, a formation region A1 of the plurality of reinforcing ribs 26 is narrowed in the circumferential direction. By narrowing the formation region A1 of the plurality of reinforcing ribs 26, the thickness difference of the inner case 21 is suppressed. The branching flow path 54 and the merging flow path 55 are formed point-symmetrically with respect to a center O of the partition wall 25. Shapes of the branching flow path 54 and the merging flow path 55 are symmetrical, and therefore, the stress concentration is alleviated. Deviation of the flow at the inlet 16 and the outlet 17 is reduced, and even when the partition wall 25 has a crank shape, the cooling water smoothly flows and the cooling performance is not impaired.

The flow path width of the merging flow path 55 is narrowed at a portion separated from the outlet 17 to one side in the motor axial direction, and the flow path width of the branching flow path 54 is narrowed at a portion separated from the inlet 16 to the other side in the motor axial direction. The narrow portion of the branching flow path 54 is located just beside the inlet 16, and the outlet 17 is located just beside the narrow portion of the outlet 17. The cooling water flows straight from the inlet 16 to the narrow portion of the branching flow path 54, and the cooling water flows straight from the narrow portion of the merging flow path 55 to the outlet 17. Therefore, even when the partition wall 25 has a crank shape, branching into the plurality of inter-rib flow paths 53 and merging from the plurality of inter-rib flow paths 53 are not inhibited.

As illustrated in FIG. 6, the plurality of cooling fins 42 are provided on the lower surface of the heat sink 41. The plurality of cooling fins 42 include the plurality of vertical fins 43 aligned in the motor axial direction and the plurality of transverse fins 44 aligned in a direction perpendicular to the motor axial direction. The plurality of vertical fins 43 extend along the plurality of vertical ribs 23, and the plurality of transverse fins 44 are orthogonal to the plurality of vertical fins 43. The plurality of inter-fin flow paths 56 are formed in the heat sink 41 as the cooling flow path 51. The cooling water flows along the vertical fins 43 by the plurality of inter-fin flow paths 56, and the inverter 39 (see FIG. 2) is cooled over the entire surface via the heat sink 41.

The plurality of vertical fins 43 are formed to be high from an intermediate portion to both ends in the extending direction thereof along the outer circumferential surface of the inner case 21 (see FIGS. 5A and 5B). The top surfaces of the plurality of vertical fins 43 are along the outer circumferential surface of the inner case 21, so that the heat sink 41 is brought close to the inner case 21 to reduce the size of the motor case 10. The plurality of vertical fins 43 and the plurality of transverse fins 44 are arranged in a lattice pattern, and the plurality of inter-fin flow paths 56 are partially blocked by the plurality of transverse fins 44. Intermittent portions of the plurality of inter-fin flow paths 56 communicate with the plurality of inter-rib flow paths 53 (see FIGS. 5A and 5B). The height of the plurality of transverse fins 44 is the same as the height of the plurality of vertical fins 43 at intersection with the vertical fins 43.

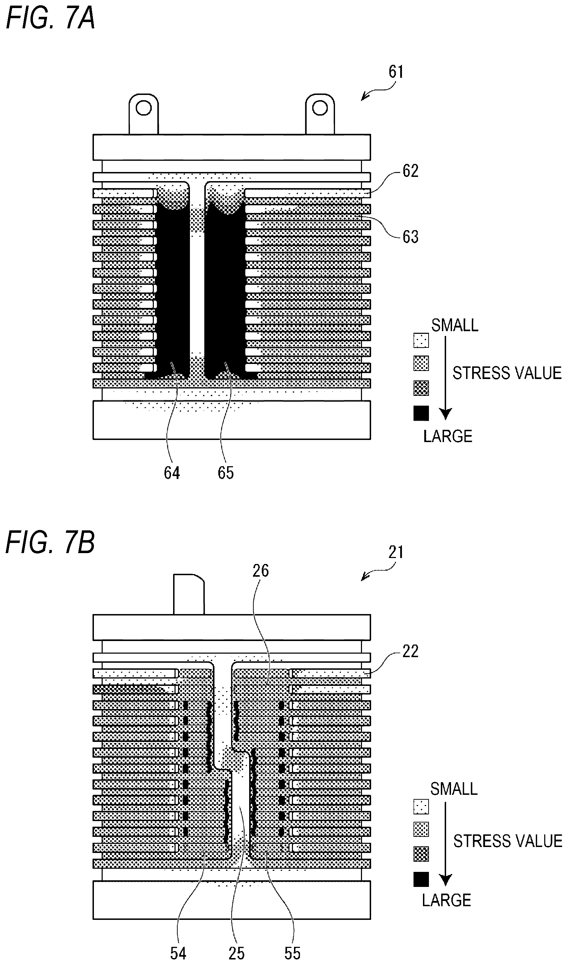

A reinforcing structure of the inner case will be described with reference to FIGS. 7A and 7B. FIGS. 7A and 7B are diagrams illustrating a stress distribution of the inner case. FIG. 7A illustrates a stress distribution of an inner case according to a comparative example, and FIG. 7B illustrates a stress distribution of an inner case according to the present embodiment.

As illustrated in FIG. 7A, in an inner case 61 according to the comparative example, a plurality of inter-rib flow paths 63 are formed by a plurality of cooling ribs 62, and a branching flow path 64 and a merging flow path 65 are formed on an upstream side and a downstream side of the plurality of inter-rib flow paths 63. Unlike the inner case 21 according to the present embodiment, the branching flow path 64 and the merging flow path 65 are not provided with ribs. Therefore, a thickness difference of the inner case 61 is large at formation portions of the plurality of cooling ribs 62 and formation portions of the branching flow path 64 and the merging flow path 65. In a case where a stator is shrink-fitted to the inner case 61, stress concentrates on the branching flow path 64 and the merging flow path 65, and a maximum stress value may exceed a material's yield point.

On the other hand, as illustrated in FIG. 7B, not only the plurality of cooling ribs 22 are provided on the outer circumferential surface of the inner case 21 of the present embodiment, but also the plurality of reinforcing ribs 26 are provided in the branching flow path 54 and the merging flow path 55. The plurality of cooling ribs 22 and the partition wall 25 are connected by the plurality of reinforcing ribs 26, and a thickness difference of the inner case 21 is small at formation portions of the plurality of cooling ribs 22 and formation portion of the branching flow path 54 and the merging flow path 55. In a case where the stator 32 (see FIG. 2) is shrink-fitted to the inner case 21, stress concentration in the branching flow path 54 and the merging flow path 55 is alleviated. The stress increases at both ends of each of the plurality of reinforcing ribs 26, but the maximum stress value is equal to or less than the material's yield point.

The plurality of reinforcing ribs 26 are formed so that a height thereof is lower than a height of the plurality of cooling ribs 22. A height of the plurality of reinforcing ribs 26 are lower than a height of the plurality of cooling ribs 22, and the top surfaces of the plurality of reinforcing ribs 26 are formed in a round shape. Therefore, the flow of the cooling water in the branching flow path 54 and the merging flow path 55 is less likely to be inhibited by the plurality of reinforcing ribs 26. In addition, the plurality of reinforcing ribs 26 and the plurality of cooling ribs 22 are smoothly connected via inclined surfaces, and concave angles of the plurality of reinforcing ribs 26 and the partition wall 25 are compound chamfered. Therefore, an abrupt change in shape between the plurality of reinforcing ribs 26 and the plurality of cooling ribs 22 and an abrupt change in shape between the plurality of reinforcing ribs 26 and the partition wall 25 decrease, and stress concentration is alleviated.

As described above, with the inverter-integrated motor 1 according to the present embodiment, the plurality of reinforcing ribs 26 with a height lower than a height of the plurality of cooling ribs 22 are provided in the branching flow path 54 and the merging flow path 55 of the cooling flow path 51, so that inflow and outflow of the cooling water are hardly inhibited. In addition, since the plurality of reinforcing ribs 26 are provided in the branching flow path 54 and the merging flow path 55, a thickness difference of the inner case 21 is reduced, and stress concentration generated in the inner case 21 can be alleviated. In addition, a surface area of the inner case 21 in contact with the cooling water is increased by the plurality of cooling ribs 22 and the plurality of reinforcing ribs 26, thereby improving the cooling performance of the motor 31. Even when the density of the cooling ribs 22 is increased, the thickness difference of the inner case 21 does not become extremely large.

In the present embodiment, an outer case includes a tubular portion and a box-shaped portion, but the outer case may be formed to be able to accommodate an inner case.

In the present embodiment, a plurality of vertical ribs and a plurality of transverse ribs are provided on an outer circumferential surface of the inner case as a plurality of cooling ribs, but it suffices as long as a plurality of ribs are provided on the outer circumferential surface of the inner case. For example, only the vertical ribs or the transverse ribs may be provided on the outer circumferential surface of the inner case as the plurality of cooling ribs.

In the present embodiment, a plurality of vertical fins and a plurality of transverse fins are provided on a lower surface of the heat sink as a plurality of cooling fins, but it suffices as long as a plurality of fins are provided on the lower surface of the heat sink. For example, only the vertical fins or the transverse fins may be provided on the lower surface of the heat sink as the plurality of cooling fins.

In the present embodiment, the plurality of reinforcing ribs are connected to the plurality of vertical ribs, but the plurality of reinforcing ribs may be separated from the plurality of vertical ribs.

In the present embodiment, the partition wall is formed in a crank shape, but the partition wall may be formed to partition a branching flow path and a merging flow path.

The inverter-integrated motor according to the present embodiment is not limited to a vehicle, and may be employed in another device.

As described above, according to a first aspect, an inner case (21) in which a stator (32) of a motor (31) is shrink-fitted and an outer case (11) in which the inner case is accommodated are included. A plurality of cooling ribs (22) are provided on an outer circumferential surface of the inner case, a cooling flow path (51) is formed between the inner case and the outer case, and at an upstream portion and a downstream portion of the cooling flow path, a plurality of reinforcing ribs (26) with a height lower than a height of the cooling ribs are provided on the outer circumferential surface of the inner case instead of the plurality of cooling ribs. With this configuration, the plurality of reinforcing ribs its height is lower than a height of the plurality of cooling ribs are provided at the upstream portion and the downstream portion of the cooling flow path, so that inflow and outflow of cooling water is hardly inhibited. In addition, the ribs are provided not only in a region excluding the upstream portion and the downstream portion of the cooling flow path, but also at the upstream portion and the downstream portion of the cooling flow path, and therefore, a thickness difference of the inner case becomes small, and stress concentration generated in the inner case can be alleviated. In addition, a surface area of the inner case in contact with the cooling water is increased by the plurality of cooling ribs and the plurality of reinforcing ribs to improve the cooling performance of the motor. Even when the density of the cooling ribs is increased, the thickness difference of the inner case does not become extremely large.

According to a second aspect, in the first aspect, the plurality of cooling ribs are aligned in a motor axial direction and extend in the circumferential direction, the cooling flow path includes a plurality of inter-rib flow paths (53) through which cooling water flows along the plurality of cooling ribs, a branching flow path (54) configured to branch the cooling water into the plurality of inter-rib flow paths at the upstream portion of the cooling flow path, and a merging flow path (55) configured to merge the cooling water in the plurality of inter-rib flow paths at the downstream portion of the cooling flow path, and in the branching flow path and the merging flow path, a plurality of reinforcing ribs are provided on the outer circumferential surface of the inner case. With this configuration, the cooling water flows through the plurality of inter-rib flow paths, so that the cooling performance of the motor is improved. The plurality of reinforcing ribs are formed to be low, so that the flow of the cooling water in the branching flow path and the merging flow path is hardly inhibited by the plurality of reinforcing ribs.

According to a third aspect, in the second aspect, a partition wall (25) extending in the motor axial direction is provided on the outer circumferential surface of the inner case, and the branching flow path and the merging flow path are adjacent to each other in the circumferential direction with the partition wall interposed therebetween. With this configuration, the motor can be cooled over the entire circumference.

According to a fourth aspect, in the third aspect, in the outer case, an inlet (16) is formed on one end side in the motor axial direction, and an outlet (17) is formed on the other end side in the motor axial direction, and the partition wall is formed in a crank shape such that a flow path width of the branching flow path is widened at a portion corresponding to the inlet and a flow path width of the merging flow path is widened at a portion corresponding to the outlet. With this configuration, the flow path widths of the branching flow path and the merging flow path are widened, so that inflow and outflow of the cooling water are less likely to be inhibited even when the plurality of reinforcing ribs are provided in the branching flow path and the merging flow path. Since the branching flow path and the merging flow path are partitioned by the crank-shaped partition wall, a formation region of the plurality of reinforcing ribs can be narrowed to suppress a thickness difference of the inner case.

According to a fifth aspect, in the fourth aspect, the branching flow path and the merging flow path are formed point-symmetrically with respect to a center of the partition wall having a crank shape. With this configuration, shapes of the branching flow path and the merging flow path are symmetrical, and therefore, the stress concentration is alleviated. Deviation of the flow at the inlet and the outlet is reduced, and even when the partition wall has a crank shape, the cooling water smoothly flows and the cooling performance is not impaired.

According to a sixth aspect, in the fourth aspect or the fifth aspect, a flow path width of the merging flow path is narrowed at a portion separated from the outlet to one side in the motor axial direction, and a flow path width of the branching flow path is narrowed at a portion separated from the inlet to the other side in the motor axial direction. With this configuration, the cooling water flows straight from the inlet to the narrow portion of the branching flow path, and the cooling water flows straight from the narrow portion of the merging flow path to the outlet. Therefore, even when the partition wall has a crank shape, branching into a plurality of inter-rib flow paths and merging from the plurality of inter-rib flow paths are not inhibited.

According to a seventh aspect, in any of the first aspect to the sixth aspect, the plurality of cooling ribs and the plurality of reinforcing ribs are formed to have the same width. With this configuration, a thickness difference of the inner case can be reduced. A contact area between the plurality of reinforcing ribs and the cooling water is increased to improve the cooling performance.

According to an eighth aspect, in any aspect of the first aspect to the seventh aspect, a flow path width of the plurality of inter-rib flow paths is formed to be equal to or less than the width of the plurality of cooling ribs. With this configuration, the number of the inter-rib flow paths can be increased to improve the cooling performance. Even when the number of the inter-rib flow paths is increased, the rigidity of the inner case is easily maintained.

According to a ninth aspect, in any of the first aspect to the eighth aspect, top surfaces of the plurality of reinforcing ribs are rounded. With this configuration, even when the plurality of reinforcing ribs are provided in the branching flow path and the merging flow path, the flow of the cooling water is not easily inhibited.

Although the present embodiment is described, a part or all of the embodiment and modifications may be combined as another embodiment.

The technique according to the present invention is not limited to the above-described embodiment, and may be variously changed, replaced, or modified without departing from the gist of the technical concept. Further, the present invention may be implemented by other methods as long as the technical concept can be implemented by the methods through advance of the technique or other derivative techniques. Therefore, the claims cover all embodiments that may fall within the scope of the technical concept.

### REFERENCE SIGNS LIST

10: motor case
11: outer case
16: inlet
17: outlet
21: inner case
22: cooling rib
25: partition wall
26: reinforcing rib
31: motor
32: stator
51: cooling flow path
53: inter-rib flow path
54: branching flow path
55: merging flow path

## Claims

1. A motor case comprising:
an inner case (21) in which a stator (32) of a motor (31) is shrink-fitted; and
an outer case (11) in which the inner case is accommodated, wherein
a plurality of cooling ribs (22) is provided on an outer circumferential surface of the inner case,
a cooling flow path (51) is formed between the inner case and the outer case, and
at an upstream portion and a downstream portion of the cooling flow path, a plurality of reinforcing ribs (26) with a height lower than a height of the cooling ribs are provided on the outer circumferential surface of the inner case instead of the plurality of cooling ribs.

2. The motor case according to claim 1, wherein
the plurality of cooling ribs are aligned in a motor axial direction and extend in the circumferential direction,
the cooling flow path includes a plurality of inter-rib flow paths through which cooling water flows along the plurality of cooling ribs, a branching flow path configured to branch the cooling water into the plurality of inter-rib flow paths at the upstream portion of the cooling flow path, and a merging flow path configured to merge the cooling water in the plurality of inter-rib flow paths at the downstream portion of the cooling flow path, and
in the branching flow path and the merging flow path, a plurality of reinforcing ribs are provided on the outer circumferential surface of the inner case.

3. The motor case according to claim 2, wherein
a partition wall extending in the motor axial direction is provided on the outer circumferential surface of the inner case, and
the branching flow path and the merging flow path are adjacent to each other in the circumferential direction with the partition wall interposed therebetween.

4. The motor case according to claim 3, wherein
in the outer case, an inlet is formed on one end side in the motor axial direction, and an outlet is formed on the other end side in the motor axial direction, and
the partition wall is formed in a crank shape such that a flow path width of the branching flow path is widened at a portion corresponding to the inlet and a flow path width of the merging flow path is widened at a portion corresponding to the outlet.

5. The motor case according to claim 4, wherein
the branching flow path and the merging flow path are formed point-symmetrically with respect to a center of the partition wall having a crank shape.

6. The motor case according to claim 4, wherein
a flow path width of the merging flow path is narrowed at a portion separated from the outlet to one side in the motor axial direction, and a flow path width of the branching flow path is narrowed at a portion separated from the inlet to the other side in the motor axial direction.

7. The motor case according to claim 1 or 2, wherein
the plurality of cooling ribs and the plurality of reinforcing ribs are formed to have the same width.

8. The motor case according to claim 1 or 2, wherein
a flow path width of the plurality of inter-rib flow paths is formed to be equal to or less than the width of the plurality of cooling ribs.

9. The motor case according to claim 1 or 2, wherein
top surfaces of the plurality of reinforcing ribs are rounded.
